Europäisches Patentamt

(19) European Patent Office (11) Publication number: **0 037 868**

Office européen des brevets **B2**

# NEW EUROPEAN PATENT SPECIFICATION

(45) Date of publication of the new patent specification: 27.12.89

(51) Int. Cl.⁴: **C 04 B 35/46, C 04 B 35/00**

(21) Application number: **80302079.1**

(22) Date of filing: **19.06.80**

(54) **Method of producing low-expansion ceramic materials.**

(30) Priority: **02.04.80 JP 41984/80**

(43) Date of publication of application:
**21.10.81 Bulletin 81/42**

(45) Publication of the grant of the patent:
**20.07.83 Bulletin 83/29**

(45) Mention of the opposition decision:
**27.12.89 Bulletin 89/52**

(84) Designated Contracting States:
**BE DE FR GB IT NL SE**

(56) References cited:
**DD-A-96 224**
**DD-C-29 794**
**DE-A-2 645 555**
**DE-B-1 238 376**
**DE-C-971 258**
**US-A-2 776 896**
**US-A-3 784 388**

**Walter, Silikattechnik 21 (1970) Heft 9, pages 304-306**
**Pohlmann u.a. Berichte der Deutschen**
**Keramischen Gesellschaft 52 (1975), pages 179-183**
**S.Babayan et al, Arm.Khim.Zh.(1973),vol. 26, pp.549-554;**
**Berezhnoi et al. Ukrain. Chem. Journal (1955), pp.158-166;**
**N. Thielke, WADC TEchnical Report 53-165 (1953)**

(73) Proprietor: **NGK INSULATORS, LTD., 2-56, Suda-cho, Mizuho- ku, Nagoya- shi, Aichi 467 (JP)**

(72) Inventor: **Oda, Isao, No.19, 3-chome, Gokuraku Meito- Ku, Nagoya City (JP)**
Inventor: **Matsuhisa, Tadaaki, No. 2878- 678- 77, Aza- Kuroishi Ohaza- Hirabari, Tenpaku- Cho Tenpaku- ku Nagoya City (JP)**

(74) Representative: **Paget, Hugh Charles Edward, MEWBURN ELLIS & CO. 2/3 Cursitor Street, London EC4A 1BQ (GB)**

EP 0 037 868 B2

## Description

### Method of producing low-expansion ceramic materials

This invention relates to a method of producing low-expansion ceramic materials having a low coefficient of thermal expansion, a high melting point, and a high mechanical strength.

With the progress of technology in recent years, the demand for materials having good heat resistance and good thermal shock resistance is increasing. The thermal shock resistance of ceramic materials depends on various characteristics of the materials, such as their coefficient of thermal expansion, their heat conductivity, their mechanical strength, their Young's modulus, and their poison's ratio. The thermal shock resistance is also affected by the size and shape of the goods concerned and the conditions of heating and cooling or the rate of heat propagation. Among the factors affecting thermal shock resistance, the contribution of the coefficient of thermal expansion is especially large, and when the rate of heat propagation is high, the thermal shock resistance is determined almost solely by the coefficient of thermal expansion, as is well known to those skilled in the art. Accordingly, there is a strong demand for the development of low-expansion materials having good resistance to thermal shock.

Known ceramics having a comparatively low thermal expansion, i.e. a coefficient of thermal expansion of the order of 5 to 20 x $10^{-7}$ (1/°C) in the temperature range 25°C to 800°C, are cordierite (MAS) and lithium-aluminium-silicate, (LAS). However, such known ceramics have a comparatively low melting point, for example the melting point of cordierite is 1 450°C and that of lithium-aluminium-silicate is 1 423°C. Thus, for example when a honeycomb made of such ceramics is used as a catalyst substrate in a catalytic purifying apparatus of automobiles, even the honeycomb substrate formed of cordierite, which has the higher melting point, has been found vulnerable to plugging due to melting if the temperature of the catalyst bed is increased by 100°C to 200°C over that of conventional catalyst beds. The increase of the temperature of the catalyst bed is caused by alteration of the mounting position of the catalytic converter from the conventional location of under bed to close to the engine to improve the purifying efficiency of the catalyst and by design modifications involving the mounting of a turbo-charger to improve the fuel economy and engine output, which modifications cause an increase in the exhaust gas temperature as compared with that of conventional apparatus. Accordingly, the development, of low-expansion materials of good heat resistance, which also have a good thermal shock resistance equivalent to or better than that of cordierite, has been required.

Ceramics having low-expansion characteristics generally have different values of the coefficient of thermal expansion along different crystal axes of the crystals forming the ceramics, and such different values tend to cause thermal stresses in the ceramics; if the thermal stresses exceed the critical strengths of the constituent crystals or grain boundaries, micro cracks are formed in the grains or in the grain boundaries thereby to reduce the mechanical strength of the ceramics. Thus, for example, in the case of ceramic honeycombs used as catalyst substrate in automobile exhaust purifying apparatus, breakages may be caused in the ceramics when the ceramic honeycomb is pushed into a catalytic converter, or cracks and breakages are easily caused in the ceramics when the automobile is running due to vibration and other mechanical shocks. To overcome such difficulties, *there is a marked requirement for low-expansion materials having a high strength which may be used as catalyst substrates.*

DD-A-29 794 discloses ceramic materials stated to be of good resistance to temperature change, having very low preferably negative thermal expansion coefficients and consisting of 15 - 75 % $TiO_2$, 70 to 25 % $Al_2O_3$, 0 to 40 % $SiO_2$ and 0 to 20 % MgO. It is mentioned that the mechanical strength can be increased by the addition of oxides or compounds of various elements, one of which is Fe; this addition is apparently as a sintering aid.

US-A-2 776 896 makes a number of proposals for the stabilization of the low-expansion material aluminium titanate against thermal decomposition. In principle, this involves the introduction of iron in the form of iron titanate, or the introduction of magnesium or silicon or combinations thereof with or without iron, without altering the crystal type.

The method in accordance with the present invention enables certain ceramic materials comprising magnesia, alumina, titanium oxide, silica and iron oxide to be produced with a low coefficient of thermal expansion, a high melting point and high strength.

The invention provides a method of producing a low-expansion ceramic material which comprises forming a dried shaped body of a mixture of 1.2 to 20 % by weight (calculated as MgO) of magnesia or a precursor there for capable of being converted thereto on firing, 6.5 to 68 % by weight (calculated as $Al_2O_3$) of alumina or a precursor therefor capable of being converted thereto on firing, 19 to 80 % by weight (calculated as $TiO_2$) of titanium oxide or a precursor therefor capable of being converted thereto on firing, 1 to 20 % by weight (calculated as $SiO_2$) of silica or a precursor therefor capable of being converted thereto on firing, and 0.5 to 20 % by weight (calculated as $Fe_2O_3$) of iron oxide or a precursor therefor capable of being converted thereto on firing, wherein to provide at least a part of the silica ($SiO_2$) of the ceramic material, the starting mixture contains mullite, and firing the shaped body at 1 300°C to 1 700°C, so that there is produced a ceramic material whose crystalline phase has a major component in the form of magnesium oxide/aluminium oxide/titanium oxide/silicon oxide/iron oxide solid solution, the material so produced having a coefficient of thermal expansion of not more than 20 x $10^{-7}$ (1/°C) in the temperature range 25°C to 800°C, a four-point flexural strength of not less than 4900 kPa (50 kg/cm$^2$) at room temperature and a melting point of not less than 1 500°C.

Preferably, the mixture contains (calculated as MgO, Al$_2$O$_3$, TiO$_2$, SiO$_2$ and Fe$_2$O$_3$ respectively) from 2 to 17 % by weight of magnesia or precursor therefor, from 11 to 62 % by weight of alumina or precursor therefor, from 25 to 75 % by weight of titanium oxide or precursor therefor, from 2 to 15 % by weight of silica or precursor therefor, and from 2 to 10 % by weight of iron oxide or precursor therefor.

Preferably, the mixture contains from 3.5 to 60 % of mullite.

In this specification, titanium is assumed to be quadrivalent, even though it is able to form non-stiochiometric composition with oxide.

In the following description reference will be made to the accompanying drawings in which:

Fig. 1    is a graph showing the effect of the TiO$_2$ content of the MgO/Al$_2$O$_3$/TiO$_2$ system on the melting point and the coefficient of thermal expansion thereof; and

Fig. 2    is a graph showing the effects of the SiO$_2$ content on the flexural strength and the 3 coefficient of thermal expansion of ceramic materials as produced in samples 1 - 3 and comparative examples C1 and C2 described below.

The ceramic material of the invention contains:
from 1.2 to 20 % by weight of magnesia,
from 6.5 to 68 % by weight of alumna,
from 19 to 80 % by weight of titanium oxide
(calculated as titanium dioxide).

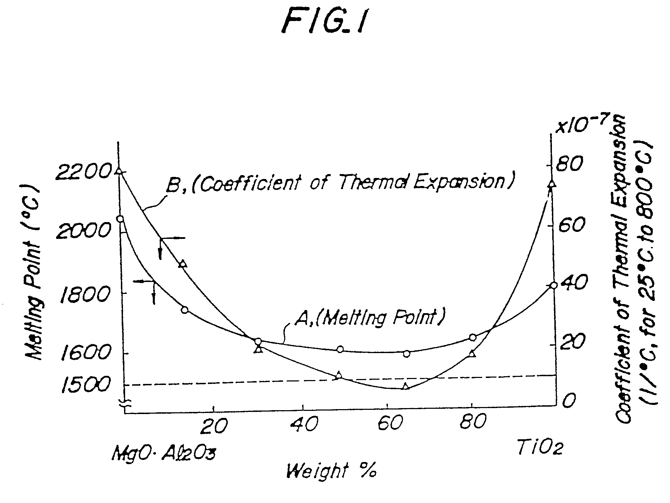

Binary ceramics of the magnesia-alumina system produce spinel crystals and give the melting points of 2 000°C or higher, so that magnesia and alumina are very useful ingredients for improving the heat-resistance of ceramic materials. Although the coefficient of thermal expansion of the binary ceramics varies somewhat depending on the composition, it is generally about 60 to 80 x 10$^{-7}$ (1/°C) and this is very large. On the other hand, the present invention is concerned with low expansion ceramics having a coefficient of thermal expansion of not more than 20 x 10$^{-7}$ (1/°C). As can be seen from Fig. 1 of the drawings, if from 19 to 80 % by weight of titanium oxide (calculated as titanium dioxide) is added to the binary magnesia-alumina system, the ternary system thus produced has a coefficient of thermal expansion of not more than 20 x 10$^{-7}$ (1/°C), while maintaining a melting point above 1 500°C. If the amount of added titanium oxide, preferably titania, exceeds 80 % by weight, the melting point increases with the amount of titania, but the coefficient of thermal expansion rapidly increases into the range of 20 to 80 x 10$^{-7}$ (1/°C), so that the amount of added titania should not exceed 80 % by weight. On the other hand, if the amount of added titania is less than 19 % by weight, although the melting point increases to 1 700°C to 2 000°C, the coefficient of thermal expansion rapidly increases to the high range of 20 to 80 x 10$^{-7}$ (1/°C), so that at least 19 % by weight of titanium oxide (as titanium dioxide) should be added, while considering the amounts of the other ingredients, ferric oxide and silica.

The iron oxide content of the ceramics of the invention is from 0.5 to 20 % by weight (as ferric oxide) since the addition of iron oxide within this range prevents variation of the coefficient of thermal expansion when the material is exposed to various heat treatments, especially to heat treatment at constant temperature for many hours such as at about 1 000°C to 1 200°C for 2 000 hours or is repeatedly heated up and cooled down. The addition of iron oxide in the above amounts also gives low-expansion materials having a low coefficient of thermal expansion of less than 20 x 10$^{-7}$ (1/°C), in the temperature range 25°C to 800°C, and a high melting point of 1 500°C or higher. If the amount of iron oxide in the ceramics is less than 0.5 % by weight (as ferric oxide), the variation of the coefficient of thermal expansion becomes too large when the ceramic is exposed to heat treatment, especially heat treatment at a constant temperature for many hours, e.g. at from about 1 000°C to 1 200°C for more than 2 000 hours, or is repeatedly heated up and cooled down. On the other hand, if the amount of iron oxide in the ceramic is more than 20 % by weight (as ferric oxide) the melting point of the ceramics is reduced below 1 500°C, resulting in an inferior heat resistance and the coefficient of thermal expansion in the temperature range 25°C to 800°C, exceeds 20 x 10$^{-7}$+ (1/°C), so that the thermal shock resistance is reduced.

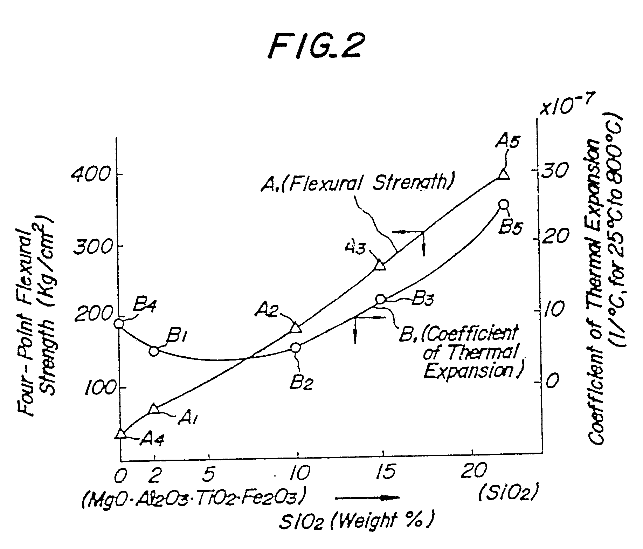

The silica content of the ceramic of the invention is from 1 to 20 % by weight since, as is shown in Fig. 2 of the drawing, if the silica content is less than 1 % by weight, the fourpoint flexural strength is reduced to below 4 900 kPa (50 kg/cm$^2$). If the silica content is greater than 20 % by weight, a high mechanical strength can be achieved but production of other different crystalline phases is so much increased that the coefficient of thermal expansion becomes greater than 20 x 10$^{-7}$ (1/°C), resulting in an inferior thermal shock resistance.

Although the major component of the crystalline phase of the low expansion ceramics material of the invention is a magnesium oxide/aluminium oxide/titanium oxide/silicon oxide/iron oxide solid solution, the present invention allows for the presence of not more than 20 % by weight, preferably not more than 10 % by weight, of a secondary crystalline phase consisting of one or more crystalline phases selected from rutile, spine, mullite, corundum, and cordierite crystalline phases. The presence of secondary crystalline phases in this amount has the effect of improving the heat resistance and strength by increasing the softening temperature and the melting temperature and reducing the gradient of the softening-shrinkage curve from the softening temperature to the melting temperature without adversely affecting the low-expansion characteristics.

In the preparation of the ceramic materials according to the invention there is first formed a mixture of magnesia (or precursor therefor), alumina (or precursor therefor), silica (or precursor therefor), titanium oxide (or precursor therefor) and iron oxide (or precursor therefor) containing from 1.2 to 20 % by weight of magnesia, from 6.5 to 68 % by weight of alumina, from 19 to 80 % by weight of titanium oxide (calculated as titanium dioxide), from 1 to 20 % by weight of silica, and from 0.5 to 20 % by weight of iron oxide (calculated as ferric oxide). Mullite is used to provide at least part of the alumina and silica.

If necessary, a plasticizer and/or binder is added to the thus formed mixture to obtain a batch which is formable in a plastic manner, and the batch is formed by a ceramic forming process such as extrusion, pressing, slip casting or injection molding. The thus formed body is then dried.

The dried body is then heated by raising its temperature at a rate of 5°C/hr to 300°C/hr and fired at 1 300°C to 1 700°C, preferably for 0.5 to 48 hours, whereby to produce a lowexpansion ceramic material of the invention.

The starting materials, apart from mullite, used in the preparation of the ceramic materials of the invention may be the pure compounds or may be precursors therefor capable of being converted thereto on firing. *Further, there may be employed starting materials capable of yielding more than one of the required ingredients, for example aluminum silicates.* Specific examples of materials which may be employed in the preparation of the ceramics of the invention include, as well as mullite, magnesia, magnesium carbonate, magnesium hydroxide, talc, alumina, aluminium hydroxide, rutile type titanium dioxide, metallic iron, alpha-type ferric oxide, gamma-type ferric oxide, hydrated iron oxide, ilmenite, clay, calcined clay, chamotte, agalmatolite, sillimanite and kyanite.

The starting materials for the low-expansion ceramics of the invention are thus not restricted to the pure substances, but various natural materials which essentially consist of the aforesaid chemical composition can be also used for producing the low-expansion ceramics.

As pointed out above, the low-expansion ceramic materials of the present invention can be formed by any conventional forming process available for forming ceramics. The shape of the final product may be as desired. For example, the final product may be a honeycomb body having a thin walled matrix with a plurality of cells extending from one end to the other and the cells of the honeycomb body can be of any geometrical cross-section such as triangular, rectangular hexagonal, and polygonal, circular, or a combination thereof. Further the final product may be a complex three-dimensional body, a thick body, a block of various shapes or a body of almost any shape or structure.

In order that invention may be well understood the following Examples are given by way of illustration only.

Mixtures having the compositions given in Table 1 were made up.

Two parts by weight of a vinyl acetate based binder were added to 100 parts by weight of each mixture and the binder was thoroughly mixed therewith. Rod-shaped test pieces (10 mm x 10 mm x 80 mm) were then made from each binder-containing mixture by pressing at a pressure of 1 000 kg/cm$^2$.

Separately, honeycomb-shaped bodies having a square cell cross-section were prepared, by adding 4 parts by weight of methyl cellulose and 30 to 40 parts by weight of water to 100 parts by weight of each mixture, thoroughly kneading the thus formed mixture in a kneader, extruding the kneaded mixture into a honeycomb shape by means of an extrusion machine, and drying the extruded goods. The rod-shaped test pieces and the honeycombshaped bodies were then fired under the firing conditions given in Table 2 which also indicates the composition of the ceramics in terms of MgO, Al$_2$O$_3$, TiO$_2$, SiO$_2$ and Fe$_2$O$_3$.

The coefficients of thermal expansion, in the temperature range 25°C to 800°C, and the melting points of the rod-shaped test pieces were measured.

A specimen of 4 mm wide by 3 mm thick by 45 mm long was prepared from each of the rodshaped test pieces by cutting and grinding. The four-point flexural strength of the specimen was measured under the conditions: inside span = 10 mm, outside span = 30 mm, loading rate = 0.5 mm/min.

Thermal shock tests were applied to the honeycomb-shaped bodies, 100 mm in diameter by 75 mm long, by means of an electric furnace, and the temperature differences for rapid heating and cooling which could be withstood without cracks or breakage were determined.

The results of the above tests are shown in Table 3.

Ceramics produced according to the invention (Examples 1 - 5) had coefficients of thermal expansion of not more than 20 x 10$^{-7}$ (1/°C), in the temperature range 25°C to 800°C, so that they showed higher withstanding temperature differences for rapid heating and cooling than did the ceramics of comparative examples 1 and 2 as demonstrated by the thermal shock tests in the electric furnace. Thus, the ceramics according to the invention had good thermal shock-resistance.

Furthermore, the ceramics of Examples 1 - 5 had four-point flexural strengths of more than 4 900 kPa (50 kg/cm$^2$), i.e. sufficient strength for practical applications, and high melting points, not lower than 1 500°C.

Fig. 1 is a graph showing the effect of the titania content in magnesia/alumina/titania ceramics on the melting point and the coefficient of thermal expansion of the ceramics. In the graph, curve A shows the relationship between the titania content and the melting point of the ceramics, while curve B shows the relationship between the titania content and the coefficient of thermal expansion of the ceramics in the temperature range 25°C to 800°C. As is apparent from the graph, the addition of titania has the effect of markedly reducing the coefficient of thermal expansion.

Fig. 2 is a graph (derived from Examples 1 - 3 and comparative example 1) showing the effect of the silica content on the flexural strength and the coefficient of thermal expansion in MgO/Al$_2$O$_3$/TiO$_2$/Fe$_2$O$_3$/SiO$_2$ ceramics. In the graph, the curve A shows the relationship between the silica content and the four-point flexural strength of the ceramics while curve B shows the relationship between silica content and the coefficient of thermal expansion of the ceramics in the range of 25°C to 800°C. Points A$_1$ and B$_1$ for a silica content of 2 % are derived from Example 1; points $A_2$ and $B_2$ for a silica content of 10 % from Example 2: points $A_3$ and $B_3$ for a silica content 15 % from Example 3; points $A_4$ and $B_4$ for a silica content of 0 % from comparative Example 1; and points $A_5$ and $B_5$ for a silica content of 22 % from comparative example Reference 2. As is apparent from Fig. 2, the addition of silica has the effect of markedly improving the flexural strength of the ceramics.

As described above, the low-expansion ceramic material produced in the invention have a low coefficient of thermal expansion, a high strength, a high melting point, and a high thermal stability even after being exposed to heat treatment for a number of hours at temperatures up to 1 400°C. Thus, the ceramic material can be widely used as ceramic materials in fields where high degrees of heat resistance, thermal shock-resistance, wear resistance, and corrosion resistance are required; for instance as substrates for catalysts for purifying automobile exhaust gases; as catalyst carriers for catalytic combustion apparatus; as filters for diesel exhaust particulate; as industrial or automobile ceramic heat exchangers; as engine parts such as pistons, cylinder liners, combustion chambers, auxiliary combustion chambers, turbo-charger rotors or the like; as turbine parts such as nozzles, rotors, shrouds, scrolls, plenum, combustors, tail cylinders, or the like; as heatresistant ceramic materials for solar energy receivers; as various refractory materials- and chinawares and as porcelains for chemical industry.

**Table 1**

**Composition of starting mixture (in wt %)**

| Raw material | Example | | | | | | |
| --- | --- | --- | --- | --- | --- | --- | --- |
| | 1 | 2 | 3 | 4 | 5 | C1 | C2 |
| Magnesia | 4.5 | 3.1 | 2.2 | - | - | 4.8 | 1.0 |
| Magnesium carbonate | - | - | - | 3.0 | 11.7 | - | - |
| Talc | - | - | - | 4,9 | - | - | - |
| Alumna | 30.9 | 21.1 | 15.0 | - | - | 33.3 | 6.4 |
| Bauxite | - | - | - | 46.4 | - | - | - |
| Mullite | 7.4 | 36.7 | 54.1 | 6.5 | 34.4 | - | 80.8 |
| Silica | - | - | - | - | 1.6 | - | - |
| Ilmenite | - | - | - | - | 9.9 | - | - |
| Titania | 51.8 | 35.4 | 26.1 | 35.7 | 42.4 | 55.7 | 10.7 |
| Ferric oxide | 5.4 | 3.7 | 2.6 | 3.5 | - | 6.2 | $1^{.1}$ |

Note: "C" denotes comparative example.

**Table 2**

| Example | Composition | | | | | Firing conditions | |
| --- | --- | --- | --- | --- | --- | --- | --- |
| | MgO (wt %) | Al$_2$O$_3$ (wt %) | TiO$_2$ (wt %) | SiO$_2$ (wt %) | Fe$_2$O$_3$ (wt %) | Temperature (°C) | Time (hours) |
| 1 | 4.3 | 37.8 | 50.4 | 2.0 | 5.5 | 1500 | 5 |
| 2 | 2.9 | 48.9 | 34.4 | 10.0 | 3.8 | 1500 | 5 |
| 3 | 2.1 | 54.8 | 25.4 | 15.0 | 2.7 | 1500 | 5 |
| 4 | 3.0 | 48.2 | 36.9 | 7.8 | 4.1 | 1550 | 3 |
| 5 | 6.0 | 27.3 | 50.1 | 12.1 | 4.5 | 1450 | 10 |
| C1 | 4.6 | 35.0 | 54.4 | - | 6.0 | 1500 | 5 |
| C2 | 0.9 | 65.6 | 10.4 | 22.0 | 1.1 | 1450 | 5 |

## EP 0 037 868 B2

**Table 3**

**Properties of ceramics**

| Property | Example | | | | | | |
|---|---|---|---|---|---|---|---|
| | 1 | 2 | 3 | 4 | 5 | C1 | C2 |
| Coefficient of thermal expansion $(25 - 800°) \times 10^{-7}$ $(1°/C)$ | 5 | 5 | 12 | 0 | 3 | 9 | 25 |
| Melting point (°C) | 1700 | 1680 | 1640 | 1690 | 1720 | 1710 | 1550 |
| Four point flexural strength $(Kg/cm^2)$ | 70 | 160 | 270 | 100 | 350 | 30 | 390 |
| Temperature difference- rapid heating and cooling (°C) | 1050 | 1150 | 850 | 1300 | 1250 | 800 | 450 |

## Claims

1. A method of producing a low-expansion ceramic material which comprises forming a dried shaped body of a mixture of 1.2 to 20 % by weight (calculated as MgO) of magnesia or a precursor therefor capable of being converted thereto on firing, 6.5 to 68 % by weight (calculated as $Al_2O_3$) of alumina or a precursor therefor capable of being converted thereto on firing, 19 to 80 % by weight (calculated as $TiO_2$) of titanium oxide or a precursor therefor capable of being converted thereto on firing, 1 to 20 % by weight (calculated as $SiO_2$) of silica or a precursor therefor capable of being converted thereto on firing, and 0.5 to 20 % by weight (calculated as $Fe_2O_3$) of iron oxide or a precursor therefor capable of being converted thereto on firing, wherein to provide at least a part of the silica ($SiO_2$) of the ceramic material, the starting mixture contains mullite, and firing the shaped body at 1 300°C to 1 700°C, so that there is produced a ceramic material whose crystalline phase has a major component in the form of magnesium oxide/aluminium oxide/titanium oxide/silicon oxide/iron oxide solid solution, the material so produced having a coefficient of thermal expansion of not more than $20 \times 10^{-7}$ (1/°C) in the temperature range 25°C to 800°C, a four-point flexural strength of not less than 4900 kPa (50 kg/cm2) at room temperature and a melting point of not less than 1 500°C.

2. A method as claimed in claim 1 wherein the mixture contains (calculated as MgO, $Al_2O_3$, $TiO_2$, $SiO_2$ and $Fe_2O_3$ respectively) from 2 to 17 % by weight of magnesia or precursor therefor, from 11 to 62 % by weight of alumina or precursor therefor, from 25 to 75 % by weight of titanium oxide or precursor therefor, from 2 to 15 % by weight of silica or precursor therefor, and from 2 to 10 % by weight of iron oxide or precursor therefor.

3. A method as claimed in claim 1 or claim 2 wherein the starting mixture contains from 3.5 to 60 % by weight of mullite.

4. A method as claimed in any one of the preceding claims wherein the ceramic material produced contains a secondary crystalline phase or phases present in said major component, said secondary phase or phases being in total an amount not exceeding 20 % by weight of the material of phases selected from rutile, spinel, mullite, corundum and cordierite crystalline phases.

5. A method as claimed in any one of the preceding claims wherein the ceramics material produced has the shape of a honeycomb structure.

## Patentansprüche

1. Verfahren zur Herstellung eines Keramikmaterials mit niedriger Ausdehnung, umfassend das Ausbilden eines getrockneten Formkörpers aus einer Mischung aus 1,2 bis 20 Gew.% (berechnet als MgO) Magnesiumoxid oder einem Vorläufer dafür, der beim Brennen in Magnesiumoxid überführt wird, 6,5 bis 68 Gew.% (berechnet als $Al_2O_3$) Aluminiumoxid oder einem Vorläufer dafür, der beim Brennen in Aluminiumoxid überführt wird, 19 bis 80 Gew.-% (berechnet als $TiO_2$) Titanoxid oder einem Vorläufer dafür, der beim Brennen in Titanoxid überführt wird, 1 bis 20 Gew.% (berechnet als $SiO_2$) Siliziumoxid oder einem Vorläufer dafür, der beim Brennen in Siliziumoxid überführt wird, 0,5 bis 20 Gew.-% (berechnet als $Fe_2O_3$) Eisenoxid oder einem Vorläufer dafür, der beim Brennen in Eisenoxid überführt wird, bei dem bei der Zurverfügungstellung wenigstens eines Teils des Siliziumdioxids ($SiO_2$) des Keramikmaterials die Ausgangsmischung Mullit enthält und der Formkörper bei 1300 bis 1700°C gebrannt wird, unter Ausbildung eines Keramikmaterials, dessen kristalline Phase als Hauptkomponente in Form einer festen Lösung von Magnesiumoxid/Aluminiumoxid/Titanoxid/Siliziumoxid/Eisenoxid vorliegt, wobei das Material so hergestellt wird, daß der thermische Ausdehnungskoeffizient nicht mehr als $20 \times 10^{-7}$ (1/°C) im Temperaturbereich von 25 bis 800°C beträgt und eine Vier-Punkt-Biegefestigkeit von nicht weniger als 4900 kPa (50 kg/cm²) bei Raumtemperatur und einem Schmelzpunkt von nicht weniger

6

# EP 0 037 868 B2

als 1500°C vorliegt.

2. Verfahren gemäß Anspruch 1, bei dem die Mischung (berechnet als MgO, Al₂O₃, TiO₂, SiO₂ bzw. Fe₂O₃) 2 bis 17 Gew.-% Magnesiumoxid oder einem Vorläufer dafür, 11 bis 62 Gew.-% Aluminiumoxid oder einem Vorläufer dafür, 25 bis 75 Gew.-% Titanoxid oder einem Vorläufer dafür, 2 bis 15 Gew.-% Siliziumoxid oder einem Vorläufer dafür, und 2 bis 10 Gew.-% Eisenoxid oder einem Vorläufer dafür, enthält.

3. Verfahren gemäß Anspruch 1 oder Anspruch 2, bei dem die Ausgangsmischung 3,5 bis 60 Gew.-% Mullit enthält.

4. Verfahren gemäß einem der vorhergehenden Ansprüche, bei dem das gebildete Keramikmaterial eine sekundäre kristalline Phase oder Phasen in der Hauptkomponente enthält, wobei die sekundäre Phase oder Phasen insgesamt eine Menge, die 20 Gew.-% des Materials in den Phasen nicht übersteigt, ausmacht und aus kristallinen Phasen aus Rutil, Spinel, Mullit, Corund und Cordierit ausgewählt ist.

5. Verfahren gemäß einem der vorhergehenden Ansprüche, bei dem das hergestellte Keramikmaterial die Form einer Honigwabenstruktur hat.

## Revendications

1. Procédé de préparation d'une matière céramique à faible dilatation, qui comprend les étapes consistant à réaliser un corps façonné séché constitué d'un mélange de 1,2 à 20 % en poids (calculé en MgO) de magnésie ou d'un précurseur de cette dernière pouvant être converti en magnésie par cuisson, de 6,5 à 68 % en poids (calculé en Al₂O₃) d'alumine ou d'un précurseur de celle-ci pouvant être converti en alumine par cuisson, de 19 à 80 % en poids (calculé en TiO₂) d'oxyde de titane ou d'un précurseur de celui-ci capable d'être transformé en oxyde de titane par cuisson, de 1 à 20 % en poids (calculé en SiO₂) de silice ou d'un précurseur de celle-ci pouvant être converti en silice par cuisson et de 0,5 à 20 % en poids (calculé en Fe₂O₃) d'oxyde de fer ou d'un précurseur de celui-ci pouvant être converti en oxyde de fer par cuisson, dans lequel, pour fournir une partie au moins de la silice (SiO₂) de la matière céramique, le mélange de départ contient de la mullite, et à cuire le corps façonné à une température de 1300 à 1700°C pour produire ainsi une matière céramique dont la phase cristalline comprend un composant principal sous la forme d'une solution solide d'oxyde de magnésium/oxyde d'aluminium/oxyde de titane/oxyde de silicium/oxyde de fer, la matière ainsi produite ayant un coefficient de dilatation thermique qui ne dépasse pas $20 \times 10^{-7}$ (1/°C) dans l'intervalle de températures de 25°C à 80°C, une résistance à la flexion en quatre points qui n'est pas inférieure à 4900 kPa (50 kg/cm²) à la température ambiante et un point de fusion qui n'est pas inférieur à 1500°C.

2. Procédé selon la revendication 1, dans lequel le mélange contient (calculé en MgO, Al₂O₃, TiO₂,SiO₂, Fe₂O₃ respectivement) de 2 à 17 % en poids de magnésie ou d'un précurseur de celle-ci, de 11 à 62 % en poids d'alumine ou d'un précurseur de celle-ci, de 25 à 75 % en poids d'oxyde de titane ou d'un précurseur de celui-ci, de 2 à 15 % en poids de silice ou d'un précurseur de celle-ci et de 2 à 10 % en poids d'oxyde de fer ou d'un précurseur de celui-ci.

3. Procédé selon la revendication 1 ou 2, dans lequel le le mélange de départ contient de 3,5 % à 60 % en poids de mullite.

4. Procédé selon l'une quelconque des revendications précédentes, dans lequel la matière céramique produite contient une ou des phase(s) cristalline(s) secondaire(s) présente(s) dans ledit composant principal, ladite ou lesdites phase(s) secondaire(s) représentant au total une quantité ne dépassant pas 20 % en poids de la matière de phases choisies parmi les phases cristallines rutile, spinelle, mullite, corindon et cordiérite.

5. Procédé selon l'une quelconque des revendications précédentes, dans lequel la matière céramique produite présente la forme d'une structure en nids d'abeilles.

EP 0 037 868 B2

# FIG. 1

# FIG.2